# EUROPEAN PATENT SPECIFICATION

(11) **EP 3 652 475 B1**
(45) Date of publication and mention of the grant of the patent: **29.06.2022**
(21) Application number: 18752271.9
(22) Date of filing: 11.07.2018
(51) Int. Cl.: F16L 19/028

(54) **A PIPE CONNECTING DEVICE WITH SCREW ELEMENT FOR CONNECTING PIPES**
ROHRVERBINDUNGSVORRICHTUNG MIT EINEM SCHRAUBELEMENT ZUR VERBINDUNG VON ROHREN
DISPOSITIF DE RACCORDEMENT DE TUYAUX AVEC UN ÉLÉMENT VIS DE RACCORDEMENT DE TUYAUX

(30) Priority: 11.07.2017 DE 202017104112 U
(43) Date of publication of application: 20.05.2020
(73) Proprietor: TI Automotive (Heidelberg) GmbH, 69123 Heidelberg (DE)
(72) Inventor: STAHN, Andreas, 69231 Rauenberg (DE); HOFFMANN-LEUSCHEL, Julian, 59469 Ense (DE)
(74) Representative: Andrejewski - Honke Patent- und Rechtsanwälte Partnerschaft mbB
(86) International application number: PCT/IB2018/055107
(87) International publication number: WO 2019/012444

(56) References cited:
- WO-A1-2007/063079
- DE-B3-102012 108 433
- US-A1- 2017 203 743

## Description

The present disclosure relates to a pipe connecting device for connecting pipes, preferably automotive pipes, having a screw element, wherein a pipe is connected to the screw element and wherein the screw element is connectable to a connecting element by means of a screw connection, wherein the screw element has at least one thread and at least one thread-free contact surface, wherein the thread is provided with a first coating in at least some areas, and wherein at least one thread-free contact surface is provided with a second coating in at least some areas.

Screw elements and pipe connecting devices for pipes and/or automotive pipes are known in various embodiments from practice. In particular there are known screw elements, which are embodied as screw fittings, with which a pipe, in particular an automotive pipe, can be connected to a connecting element. These known screw fittings are normally provided with a coating, in particular an anti-corrosion coating, which usually covers the entire screw fitting.

With the screw connections known from practice, having the known screw fittings, an unwanted loosening or release of the screw connection often occurs. Such unwanted loosening/release occurs mainly with screw fittings with connected pipes, including automotive pipes in particular. When the screw fittings are screwed together, this may result in the pipe also being rotated, and due to torsion on the pipe, spring force is stored in the pipe, so to speak. The torsion of the pipe generates a reverse torque, which can result in an unwanted and/or uncontrolled loosening or release of the screw connection. Unwanted loosening or release of the screw connections may also occur in particular due to vibrations, which occur in motor vehicles in particular.

EP 2 136 119 B1 discloses a screw element of the type described above and/or a screw element according to the preamble of claim 1. These screw elements have basically proven reliable. They can nevertheless be improved further with regard to optimization of their coatings. This is also true of their abrasion properties and corrosion properties in particular.

WO 2007/063079 A1 discloses a low frictional layer on the threaded parts of a screwed connection between two pipes. A high friction layer is applied below this layer in order to cover also the axial facing parts of the threads and the end of the pipe. These measures are taken in order to improve the yield torque of the connection.

Accordingly, the present disclosure is based on the technical problem of providing a screw element of the type defined in the introduction which is characterized by optimized coating and by a high abrasion resistance and a high corrosion resistance. The present disclosure is also based on the technical problem of providing a pipe connecting device having such a screw element.

To solve the technical problem, the present invention teaches a pipe connecting device for connecting pipes, preferably automotive pipes according to claim 1. The pipe connecting device according to the present disclosure is especially preferably used for automotive pipes in motor vehicles. The term automotive pipe here comprises lines for fuels, for brake fluids and for refrigerants and the like.

Within the scope of the present disclosure, thread-free contact surfaces include in particular the threadless surfaces which exert a force on the corresponding mating screw element of the screw element in the case of a screw connection.

This may be in particular the front end of a threaded bolt and/or a screw fitting or it may be the bottom side of a screw head of a screw element and/or of a threaded bolt.

According to a recommended embodiment of the present disclosure, the first coating has a first friction coefficient µ1 and the second coating has a second friction coefficient µ2, and the first friction coefficient µ1 is larger than the second friction coefficient µ2. One embodiment that is reliable is characterized in that the first friction coefficient µ₁ is much higher than the second friction coefficient µ₂. The friction coefficient is also known as the coefficient of friction or the friction value. It is recommended that the ratio µ₁ / µ₂ of the first friction coefficient µ₁ of the first coating to the second friction coefficient µ₂ of the second coating should be between 1.1 and 5.0, more preferably between 1.1 and 4.0, preferably between 1.25 and 4.0, in particular between 1.5 and 3.5, more preferably between 1.26 and 3.5 and very preferably between 1.3 and 3.5 and/or between 1.3 and 3. According to a highly recommended embodiment of the present disclosure, the friction coefficient µ₁ of the first coating is greater than 0.1 and preferably greater than 0.15. The friction coefficient µ₂ of the second coating is preferably less than 0.08 and especially less than 0.075. The friction coefficients µ₁ and µ₂ of the first and second coatings can be adjusted by the at least one lubricant contained therein, in particular by the type and amount of this at least one lubricant. The lubricants are also specified in greater detail below.

A particularly preferably embodiment of the present disclosure is characterized in that the screw element, i.e., the surface of the screw element is provided completely or substantially completely with the first coating, and the second coating is applied to the first coating in at least some areas on the at least one thread-free contact surface. It is within the scope of the present disclosure that, of the two coatings according to the present disclosure (first and second coatings), only the first coating covers the screw element over the full surface or substantially over the full surface, and only in the area of the at least one thread-free contact surface is the second coating applied to the first coating in at least some areas. Therefore, only the area of the thread-free contact surface or the at least one thread-free contact surface with respect to the two layers according to the present disclosure is designed as two layers, and only the first coating is applied in a single layer on the entire remainder or substantially the entire remainder of the screw element. It is also within the scope of the present disclosure that the screw element is provided with additional coatings beneath the first coating, in particular with at least one anti-corrosion coating and/or at least one passivation layer. For example, adhesion promoter layers may also be present. The additional layers that are preferably also provided are described in greater detail below.

The screw element according to the present disclosure is a screw fitting, which has a thread that is embodied as an external thread. This thread is then provided with the first coating, which has the first friction coefficient µ1 in particular, in at least one or more areas. The screw element is a screw fitting to which a pipe is connected. According to the recommended embodiment of the present disclosure, the pipe or the automotive pipe passes through the screw fitting in the axial direction and preferably engages behind the front end of the screw fitting with a pipe end. The pipe end is embodied as a flange.

It is also within the scope of the present disclosure that the at least one thread-free contact surface and/or the thread-free contact surfaces of the screw element is/are oriented perpendicular or substantially perpendicular to the screw-in direction of the screw element. The front end of the screw fitting according to a recommended embodiment of the present disclosure has a thread-free contact surface, which is coated in at least one or more areas with the second coating, which has the second friction coefficient µ2 in particular. It is also within the scope of the present disclosure that the screw fitting has a screw head, and the bottom side of the screw head on the thread side has a thread-free contact surface, which is coated in at least one or more areas with the second coating, which has the second friction coefficient µ2 in particular. A very preferred embodiment of the present disclosure is characterized in that the thread-free contact surface is provided completely with the second coating on the front end of a screw fitting and/or the thread-free contact surface on the bottom side of the screw head is provided completely or substantially completely with the second coating.

It is also basically within the scope of the present disclosure that a screw nut has a thread designed as an inside thread. In this case, the inside thread is coated with the first coating in at least one or more areas and preferably completely or substantially completely. The screw nut serves to receive a screw fitting and preferably to receive a screw fitting coated according to the present disclosure. A preferred embodiment is characterized in that the screw nut is a connecting sleeve with an inside thread for connecting two pipes or is a blind hole with an inside thread in a connecting block for a pipe to be connected. It is within the scope of the present disclosure that a contact flange of the connecting sleeve has a thread-free contact surface, which is coated with the second coating in at least one or more areas and preferably completely or substantially completely. According to one embodiment of the present disclosure, the first friction coefficient µ1 of the first coating amounts to at least 1.2 times, in particular at least 1.5 times, preferably at least two times and according to one embodiment variant, at least three times the second friction coefficient µ2 of the second coating.

It is within the scope of the present disclosure that the base body of a screw fitting according to the present disclosure, is made of metal or substantially made of metal and is preferably made of steel or substantially made of steel. This base body is expediently coated first with a zinc-nickel layer or with a zinc-nickel anti-corrosion coating. According to a recommended embodiment of the present disclosure, a passivation layer is applied to this zinc-nickel layer or zinc-nickel anti-corrosion coating. The entire screw element or substantially the entire screw element is expediently coated with both the zinc-nickel layer and the passivation layer. The first coating is preferably applied to the passivation layer, wherein the surface of the screw element or the surface of the passivation layer is provided with this first coating according to a recommended embodiment, either completely or substantially completely. It is advisable for the second coating to be applied to the first coating on the at least one thread-free contact surface of the screw element, in particular on the front end of the screw element or the screw fitting, in at least one or more areas, preferably completely.

A successful embodiment of the present disclosure is characterized in that the layer thickness of the second coating is greater than the layer thickness of the first coating. The layer thickness of the first coating expediently amounts to 2 to 25 µm, preferably 3 to 20 µm. It is recommended that the layer thickness of the second coating should amount to 1 to 100 µm, preferably 2 to 80 µm.

It is within the scope of the present disclosure that the first coating comprises a phenol-based epoxy compound containing at least one lubricant. It is advisable for the first coating to contain at least 40 wt%, preferably at least 50 wt% and especially at least 60 wt% of the phenol-based epoxy compound. The lubricant is expediently present in the first coating in an amount of 4 to 20 wt%, preferably 5 to 15 wt%, and especially 7 to 13 wt%, and very preferably 8 to 12 wt%. According to a preferred embodiment of the present disclosure, the lubricant in the first coating is a polymer material or an organic polymer material. The first coating preferably contains at least one lubricant from the group "polyolefin, paraffin, waxy material, polyamide, fluoropolymer." It is recommended that the at least one polyolefin used as a lubricant should expediently be polyethylene and/or polypropylene. Polytetrafluoroethylene (PTFE) is recommended as the fluoropolymer used as a lubricant for the first coating.

It is recommended that the first coating should contain 3 to 25wt%, preferably 4 to 20 wt%, and especially preferably 10 to 20 wt% of at least one filler material. It is within the scope of the present disclosure that multiple filler materials are present in the first coating, expediently yielding the aforementioned amount in wt% on the whole. A very preferred embodiment of the present disclosure is characterized in that the first coating contains 3 to 20wt% aluminum, preferably 4 to 15 wt% aluminum, and especially 7 to 13 wt% aluminum.

A successful embodiment of the present disclosure is characterized in that the second coating contains at least one polymer and at least one lubricant. An embodiment variant of the present disclosure is characterized in that the polymer of the second coating is an epoxy compound and in particular is a phenol-based epoxy compound. The second coating preferably contains at least one lubricant from the group "molybdenum sulfide, graphite, fluoropolymer." The fluoropolymer may be a polytetrafluoroethylene (PTFE). It is within the scope of the present disclosure for the friction coefficient of the second coating to be adjustable through the type and quantity of the lubricant. It is recommended that the quantity of lubricant in the second coating should amount to 6 to 22 wt%, preferably 7 to 20 wt%, and especially 7 to 18 wt%. It has proven successful for the layer thickness of the second coating to be 3 to 35 µm, preferably 5 to 20 µm.

According to a preferred exemplary embodiment of the present disclosure, the first coating has a layer thickness of 2 to 25 µm, preferably 3 to 20 µm, and the first coating has a friction coefficient µ1 of 0.1 to 0.7, preferably 0.1 to 0.6. According to this exemplary embodiment, the second coating has a layer thickness of 1 to 100 µm, preferably 2 to 80 µm, and the second coating has a friction coefficient µ2 of 0.06 to 0.2.

To solve the technical problem, the present disclosure discloses a pipe connecting device for connecting pipes, in particular for connecting automotive pipes, with a screw element according to the present disclosure and a connecting element, wherein the screw element can be screwed together with the connecting element. It is within the scope of the present disclosure for a pipe to be connected to the screw element according to the present disclosure, and this screw element can be connected to a connecting element by a screw connection. According to the invention, the screw element is designed as a screw fitting, wherein the screw fitting has an axial bore, with a pipe passing through said axial bore. It is within the scope of the present disclosure that the pipe has a flange at one end of the pipe, and that the front end of the screw fitting which is provided with the second coating is in contact with the back side of the flange of the flange of the pipe. Fundamentally it is also within the scope of the present disclosure that the back side of the flange of the end of the pipe is provided with the second coating. The front end of the screw fitting is expediently in form-fitting contact with the back side of the flange in at least one or more areas. According to one embodiment variant of the present disclosure, the flange on the end of the pipe is an F flange, such that the rear side of the flange is arranged transversely or perpendicular to or substantially perpendicular to the longitudinal axis of the pipe. The front end of the screw fitting according to the present disclosure then has at least one surface section, which is oriented transversely or perpendicular to or substantially perpendicular to the longitudinal axis of the pipe, said surface section being in form-fitting or substantially form-fitting contact with the rear side of the flange. This surface section preferably runs over the circumference of the screw fitting. The term F flange here refers in particular to a flange having an F shape, such as that described in the DIN standard 74234. According to another embodiment of the present disclosure, the flange on the end of the pipe is an E flange, the rear side of which is designed to be conical or substantially conical. Then the front end of the screw fitting is equipped with at least one conical or substantially conical surface section, which is in form-fitting or substantially form-fitting contact with the flange rear side of the E flange. This surface section expediently runs over the circumference of the screw fitting. The term E flange here refers in particular to a flange having an E shape, such as that described in the DIN standard 74234.

The present disclosure also relates to a method for manufacturing a screw element, i.e., a screw element according to the present disclosure, wherein the screw element has at least one thread and at least one thread-free contact surface, wherein the thread is coated with a first coating in at least one or more areas, wherein at least one thread-free contact surface is coated with a second coating in at least one or more areas, and wherein the first coating comprises at least 50 wt% of at least one epoxy resin and at least one lubricant.

The present disclosure is first based on the finding that unintended loosening or release of the respective screw connection can be prevented in an effective and functionally secure manner. The present disclosure is also based on the finding that the screw fitting, which has been coated with the first coating in the area of its thread, can nevertheless be screwed together easily as part of the respective screw connection. At the same time, however, this first coating subsequently prevents unintended release of the screw connection. To this extent, the first coating according to the present disclosure is characterized by very special advantages. However, the second coating applied to the first coating in the area of the contact faces reduces and/or prevents the transfer of torsional forces to the parts to be joined and/or to the pipes or pipe ends to be joined. This definitely reduces or even completely prevents a reverse torque. Within the scope of the present disclosure, the first coating is particularly important. This first coating adheres optimally to the screw element according to the present disclosure and/or to the passivation layer of the screw element. In addition to the advantages described above, this first coating additionally ensures a high abrasion resistance of the coated surfaces of the screw element as well as an optimal corrosion protection. On the one hand, the first coating, and, on the other hand, the second coating of the screw element according to the present disclosure may be coordinated with one another in an excellent manner with respect to their friction coefficients, so that the technical problem according to the present disclosure can be solved easily and efficiently. The first coating according to the present disclosure on the screw element protects the thread of the screw element mainly from mechanical damage. The first coating according to the present disclosure also has the important advantage that the force conditions on the flange of the pipe can be optimized through the adjustment of its friction coefficient, and therefore a significantly improved imperviousness and thus a greater reliability of the pipe connection can be achieved. Furthermore, the two coatings of the screw element according to the present disclosure can be applied easily and accurately to the respective surfaces of the screw element. Furthermore, the coatings according to the present disclosure can be implemented in a relatively inexpensive manner.

The present disclosure is described in greater detail below on the basis of drawings, which illustrate just one exemplary embodiment. In schematic diagrams:
Figure 1 shows a longitudinal section through a pipe connecting device with a screw element according to the present disclosure in the form of a screw fitting,
Figure 2 shows a section through a screw element according to the present disclosure designed as a screw fitting, and
Figure 3 shows schematically the layer sequence on a screw element according to the present disclosure in the area of a thread-free contact surface.

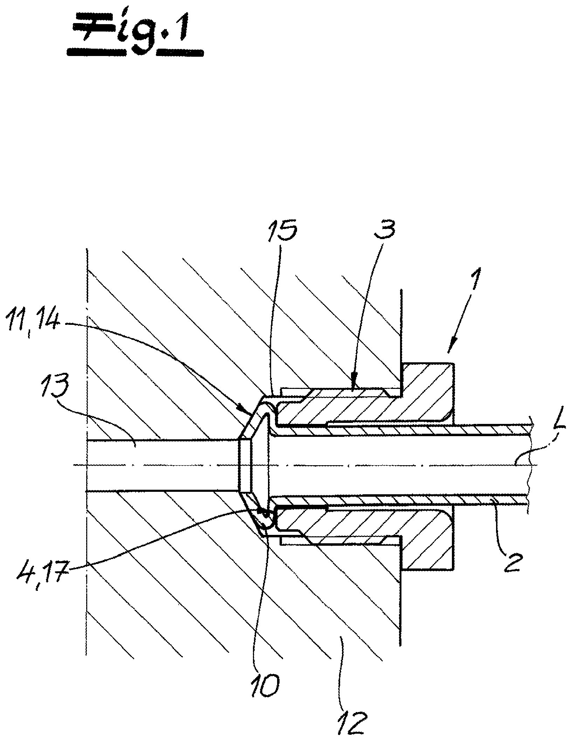

Figure 1 illustrates a screw element according to the present disclosure, designed as a screw fitting 1 in a pipe connecting device. In this exemplary embodiment, a pipe 2 passes through the screw fitting 1 in the axial direction, and the pipe 2 has a front element on one end, designed as a flange 10. It is preferably within the scope of the present disclosure in this exemplary embodiment that this is a metal flange 10, which is preferably molded in one piece on the pipe end of the pipe 2. In this exemplary embodiment, the screw fitting 1 is screwed into a connecting element designed as a connecting block 12. Expediently and in this exemplary embodiment, the connecting block 12 here has an integrated second pipe 13. The screw fitting 1 presses the flange 10 with its front sealing surface 11 onto a connecting surface 14 of the connecting block 12. The screw fitting 1 is also screwed into a blind hole 15 in the connecting block 12 with its thread 3, which is designed as an external thread. The thread 3 on the screw fitting 1 is provided with the first coating 7 according to the present disclosure, wherein this first coating 7 preferably has a first friction coefficient µ₁. The thread-free contact surface 4 is formed on the front end of the screw fitting 1, and this thread-free contact surface 4 in this exemplary embodiment is preferably provided with a second coating 8, which preferably has a second friction coefficient µ₂. The first friction work µ₁ is larger than the second friction coefficient µ₂ in the recommended version and in the exemplary embodiment.

In the exemplary embodiment according to Figure 1, the flange 10 of the pipe end of the pipe 2 is designed as an F flange, whose flange rear side is arranged transversely or perpendicular to the longitudinal axis L of the pipe. The front end of the screw fitting 1, which is provided with the second coating 8, has a complementary surface section 17 arranged perpendicular to the longitudinal axis L of the pipe and in form-fitting contact with the flange rear side of the F flange. In tightening the screw fitting 1, the screw fitting 1 with its thread-free contact surface 4 is pressed against the flange 10, i.e., against the flange rear side of the flange 10. Likewise, the front sealing surface 11 of the flange 10 is pressed against the connecting surface 14 of the connecting block 12. This creates a fluid-tight connection between the pipe 2 and a line 13 integrated into the connecting block 12.

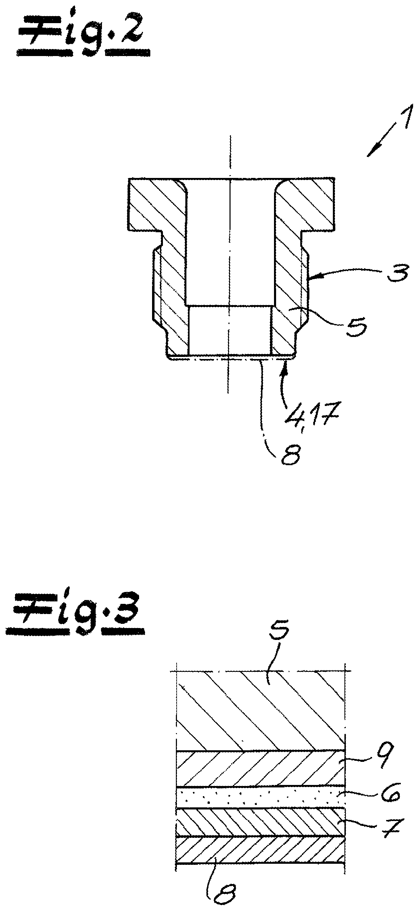

Figure 2 shows a screw element according to the present disclosure, designed as a screw fitting 1. As already explained above, this screw fitting 1 has a thread 3 and a thread-free contact surface 4 on its front end. The thread 3 is coated with the first coating 7 having the first friction coefficient µ₁ and is preferably coated completely, i.e., on the complete circumference in this exemplary embodiment. In the recommended version and in the exemplary embodiment, the entire screw fitting 1, i.e., the entire surface of the screw fitting 1 is first provided with the first coating 7 having the first friction coefficient µ₁. In this exemplary embodiment, the second coating 8 with the second friction coefficient µ₂ on the thread-free contact surface 4 on the front end of the screw fitting 1 is preferably applied to the first coating 7. The first friction coefficient µ₁ of the first coating 7 here is expediently greater than the second friction coefficient µ₂ of the second coating 8.

Figure 3 illustrates a very preferred layer sequence for the coating of the screw element or screw fitting 1 according to the present disclosure, namely in the area of the thread-free contact surface 4 on the front end of the screw fitting 1. First, a zinc-nickel layer or a zinc-nickel anti-corrosion coating 9 is applied to the base body 5, i.e., to the metallic base body 5 of the screw fitting 1. The entire screw element or screw fitting 1 according to the present disclosure is preferably provided with this zinc-nickel anti-corrosion coating 5. According to the preferred embodiment of the present disclosure and in the exemplary embodiment, a passivation layer 6, which is expediently arranged on the entire surface of the screw fitting 1 or on the zinc-nickel anti-corrosion coating 9, is provided on the zinc-nickel anti-corrosion coating 9. In this exemplary embodiment, the first coating 7 according to the present disclosure, having the first friction coefficient µ₁, is preferably applied to the passivation layer 6, in particular over the entire surface of the screw fitting 1. In the area of the thread-free contact surface 4 on the front end of the screw fitting, the second coating 8 having the second friction coefficient µ₂ in this exemplary embodiment is expediently applied to the first coating 7 having the first friction coefficient µ₁. In the exemplary embodiment according to Figure 3, the base body 5 of the screw element or the screw fitting 1 according to the present disclosure is thus provided with a total of four layers in the area of the thread-free contact surface 4 on the front end of the screw fitting 1, namely the zinc-nickel anti-corrosion coating 9, the passivation layer 6, the first coating 7 and the second coating 8.

## Claims

1. A pipe connecting device for connecting pipes, in particular automotive pipes, having a screw element, wherein a pipe (2) is connected to the screw element and wherein the screw element is connectable to a connecting element by means of a screw connection, wherein the screw element has at least one thread (3) and at least one thread-free contact surface (4), wherein the thread (3) is provided with a first coating (7) in at least one area, wherein at least one thread-free contact surface (4) is provided with a second coating (8) in at least one area, wherein the screw element is a screw fitting (1) with an axial bore, said axial bore having a pipe (2) passing therethrough, wherein the pipe (2) has a flange (10) on its pipe end, and wherein the thread-free contact surface (4) of the screw fitting (1), which is provided with the second coating (8), is in contact with the flange (10) or the rear side of the flange (10), **characterised in that** the first coating (7) comprises at least 40 wt%, preferably at least 50 wt% of at least one epoxy compound, in particular at least one phenol-based epoxy compound and at least one lubricant.

2. The pipe connecting device according to claim 1, **characterized in that** the first coating has a first friction coefficient µ₁, and the second coating has a second friction coefficient µ₂, wherein the first friction coefficient µ₁ is greater than the second friction coefficient µ₂.

3. The pipe connecting device according to any one of claims 1 or 2, **characterized in that** the ratio of the first friction coefficient µ₁ of the first coating to the second friction coefficient µ₂ of the second coating (µ₁/µ₂) is between 1.1 and 4.0, preferably between 1.25 and 3.5, especially between 1.26 and 3.5 and most especially preferably between 1.3 and 3.

4. The pipe connecting device according to any one of claims 1 to 3, **characterized in that** the screw element, or the surface of the screw element, is provided completely or substantially completely with the first coating (7), and the second coating (8) is applied to the first coating (7) in at least one area of the at least one thread-free contact surface (4).

5. The pipe connecting device according to any one of claims 1 to 4, **characterized in that** the screw element is a threaded bolt or a screw fitting (1), which has a thread (3) configured as an external thread.

6. The pipe connecting device according to claim 5, **characterized in that** the front end of the threaded bolt or the screw fitting (1) has the at least one thread-free contact surface (4), which is coated with the second coating in at least one area.

7. The pipe connecting device according to any one of claims 1 to 6, **characterized in that** the layer thickness of the first coating (7) is 2 to 25 µm, preferably 3 to 20 µm.

8. The pipe connecting device according to any one of claims 1 to 7, **characterized in that** the lubricant in the first coating (7) is a polymer material or an organic polymer material and preferably is at least one lubricant selected from the group "polyolefin, paraffin, waxy material, polyamide, fluoropolymer."

9. The pipe connecting device according to any one of claims 1 to 8, **characterized in that** the lubricant is present in the amount of 4 to 20 wt%, preferably 5 to 15 wt% and especially 7 to 13 wt% in the first coating.

10. The pipe connecting device according to any one of claims 1 to 9, **characterized in that** the first coating (7) contains 3 to 25 wt%, preferably 4 to 20 wt% and especially 10 to 20 wt% of at least one filler material.

11. The pipe connecting device according to any one of claims 1 to 10, **characterized in that** the layer thickness of the second coating (8) is 1 to 100 µm, preferably 2 to 80 µm.

12. The pipe connecting device according to any one of claims 1 to 11, **characterized in that** the layer thickness of the second coating (8) is greater than the layer thickness of the first coating (7).

13. The pipe connecting device according to any one of claims 1 to 12, **characterized in that** the second coating (8) comprises at least one polymer and at least one lubricant.

14. The pipe connecting device according to any one of claims 1 to 13, **characterized in that** the second coating contains at least one lubricant from the group "molybdenum sulfide, graphite, polytetrafluoroethylene."

15. The pipe connecting device according to any one of claims 1 to 14, wherein the first coating (7) contains 3 to 20 wt% aluminum, preferably 4 to 15 wt% aluminum and especially 7 to 13 wt% aluminum.

16. The pipe connecting device according to any one of claims 1 to 15, wherein the screw element is coated with at least one anti-corrosion coating, in particular with a zinc-nickel anti-corrosion coating, and wherein this anti-corrosion coating is arranged beneath the first coating.

17. The pipe connecting device according to any one of claims 1 to 16, wherein at least one passivation layer is applied to the screw element, wherein the passivation layer is arranged beneath the first coating, and wherein the passivation layer is preferably arranged between the anti-corrosion coating and the first coating.

## Patentansprüche

1. Rohrleitungsverbindungsvorrichtung zum Verbinden von Rohrleitungen, insbesondere Kraftfahrzeugrohrleitungen, die ein Schraubelement aufweist, wobei eine Rohrleitung (2) mit dem Schraubelement verbunden ist und wobei das Schraubelement mittels einer Schraubverbindung mit einem Verbindungselement verbindbar ist, wobei das Schraubelement wenigstens ein Gewinde (3) und wenigstens eine gewindefreie Kontaktfläche (4) aufweist, wobei das Gewinde (3) in wenigstens einem Bereich mit einer ersten Beschichtung (7) versehen ist, wobei wenigstens eine gewindefreie Kontaktfläche (4) in wenigstens einem Bereich mit einer zweiten Beschichtung (8) versehen ist, wobei das Schraubelement ein Schraubfitting (1) mit einer axialen Bohrung ist, wobei durch die axiale Bohrung hindurch eine Rohrleitung (2) verläuft, wobei die Rohrleitung (2) an ihrem Leitungsende einen Flansch (10) aufweist und wobei die gewindefreie Kontaktfläche (4) des Schraubfittings (1), die mit der zweiten Beschichtung (8) versehen ist, mit dem Flansch (10) oder der Rückseite des Flansches (10) in Kontakt steht, **dadurch gekennzeichnet, dass** die erste Beschichtung (7) wenigstens 40 Gew.-%, vorzugsweise wenigstens 50 Gew.-% wenigstens einer Epoxidverbindung, insbesondere wenigstens einer Epoxidverbindung auf Phenolbasis, und wenigstens ein Schmiermittel umfasst.

2. Rohrleitungsverbindungsvorrichtung nach Anspruch 1, **dadurch gekennzeichnet, dass** die erste Beschichtung einen ersten Reibungskoeffizienten µ₁ aufweist und die zweite Beschichtung einen zweiten Reibungskoeffizienten µ₂ aufweist, wobei der erste Reibungskoeffizient µ₁ größer ist als der zweite Reibungskoeffizient µ₂.

3. Rohrleitungsverbindungsvorrichtung nach einem der Ansprüche 1 oder 2, **dadurch gekennzeichnet, dass** das Verhältnis des ersten Reibungskoeffizienten µ₁ der ersten Beschichtung zu dem zweiten Reibungskoeffizienten µ₂ der zweiten Beschichtung (µ₁/µ₂) zwischen 1,1 und 4,0, vorzugsweise zwischen 1,25 und 3,5, insbesondere zwischen 1,26 und 3,5 und ganz besonders bevorzugt zwischen 1,3 und 3 liegt.

4. Rohrleitungsverbindungsvorrichtung nach einem der Ansprüche 1 bis 3, **dadurch gekennzeichnet, dass** das Schraubelement oder die Oberfläche des Schraubelements vollständig oder im Wesentlichen vollständig mit der ersten Beschichtung (7) versehen ist und die zweite Beschichtung (8) in wenigstens einem Bereich der wenigstens einen gewindefreien Kontaktfläche (4) auf die erste Beschichtung (7) aufgebracht ist.

5. Rohrleitungsverbindungsvorrichtung nach einem der Ansprüche 1 bis 4, **dadurch gekennzeichnet, dass** das Schraubelement ein Gewindebolzen oder ein Schraubfitting (1) ist, der/das ein als Außengewinde ausgebildetes Gewinde (3) aufweist.

6. Rohrleitungsverbindungsvorrichtung nach Anspruch 5, **dadurch gekennzeichnet, dass** das vordere Ende des Gewindebolzens oder des Schraubfittings (1) die wenigstens eine gewindefreie Kontaktfläche (4) aufweist, die in wenigstens einem Bereich mit der zweiten Beschichtung beschichtet ist.

7. Rohrleitungsverbindungsvorrichtung nach einem der Ansprüche 1 bis 6, **dadurch gekennzeichnet, dass** die Schichtdicke der ersten Beschichtung (7) 2 bis 25 µm, vorzugsweise 3 bis 20 µm beträgt.

8. Rohrleitungsverbindungsvorrichtung nach einem der Ansprüche 1 bis 7, **dadurch gekennzeichnet, dass** das Schmiermittel in der ersten Beschichtung (7) ein Polymermaterial oder ein organisches Polymermaterial ist und vorzugsweise wenigstens ein Schmiermittel, ausgewählt aus der Gruppe "Polyolefin, Paraffin, Wachsmaterial, Polyamid, Fluorpolymer", ist.

9. Rohrleitungsverbindungsvorrichtung nach einem der Ansprüche 1 bis 8, **dadurch gekennzeichnet, dass** das Schmiermittel in der Menge von 4 bis 20 Gew.-%, vorzugsweise 5 bis 15 Gew.-% und insbesondere 7 bis 13 Gew.-% in der ersten Beschichtung vorhanden ist.

10. Rohrleitungsverbindungsvorrichtung nach einem der Ansprüche 1 bis 9, **dadurch gekennzeichnet, dass** die erste Beschichtung (7) 3 bis 25 Gew.-%, vorzugsweise 4 bis 20 Gew.-% und insbesondere 10 bis 20 Gew.-% wenigstens eines Füllstoffs enthält.

11. Rohrleitungsverbindungsvorrichtung nach einem der Ansprüche 1 bis 10, **dadurch gekennzeichnet, dass** die Schichtdicke der zweiten Beschichtung (8) 1 bis 100 µm, vorzugsweise 2 bis 80 µm beträgt.

12. Rohrleitungsverbindungsvorrichtung nach einem der Ansprüche 1 bis 11, **dadurch gekennzeichnet, dass** die Schichtdicke der zweiten Beschichtung (8) größer ist als die Schichtdicke der ersten Beschichtung (7).

13. Rohrleitungsverbindungsvorrichtung nach einem der Ansprüche 1 bis 12, **dadurch gekennzeichnet, dass** die zweite Beschichtung (8) wenigstens ein Polymer und wenigstens ein Schmiermittel umfasst.

14. Rohrleitungsverbindungsvorrichtung nach einem der Ansprüche 1 bis 13, **dadurch gekennzeichnet, dass** die zweite Beschichtung wenigstens ein Schmiermittel aus der Gruppe "Molybdänsulfid, Graphit, Polytetrafluorethylen" enthält.

15. Rohrleitungsverbindungsvorrichtung nach einem der Ansprüche 1 bis 14, wobei die erste Beschichtung (7) 3 bis 20 Gew.-% Aluminium, vorzugsweise 4 bis 15 Gew.-% Aluminium und insbesondere 7 bis 13 Gew.-% Aluminium enthält.

16. Rohrleitungsverbindungsvorrichtung nach einem der Ansprüche 1 bis 15, wobei das Schraubelement mit wenigstens einer Korrosionsschutzbeschichtung, insbesondere mit einer Zink-Nickel-Korrosionsschutzbeschichtung, beschichtet ist und wobei diese Korrosionsschutzbeschichtung unter der ersten Beschichtung angeordnet ist.

17. Rohrleitungsverbindungsvorrichtung nach einem der Ansprüche 1 bis 16, wobei wenigstens eine Passivierungsschicht auf das Schraubelement aufgebracht ist, wobei die Passivierungsschicht unter der ersten Beschichtung angeordnet ist und wobei die Passivierungsschicht vorzugsweise zwischen der Korrosionsschutzbeschichtung und der ersten Beschichtung angeordnet ist.

## Revendications

1. Dispositif de raccordement de tuyaux pour le raccordement de tuyaux, en particulier de tuyaux automobiles, comportant un élément à vis, dans lequel un tuyau (2) est raccordé à l'élément à vis et dans lequel l'élément à vis comporte au moins un filet (3) et au moins une surface de contact exempte de filet (4), dans lequel le filet (3) est pourvu d'un premier revêtement (7) dans au moins une région, dans lequel au moins une surface de contact exempte de filet (4) est pourvue d'un deuxième revêtement (8) dans au moins une région, dans lequel l'élément à vis est une fixation à vis (1) avec un alésage axial, ledit alésage axial présentant un tuyau (2) traversant celui-ci, dans lequel le tuyau (2) comporte une bride (10) à son extrémité de tuyau, et dans lequel la surface de contact exempte de filet (4) de la fixation à vis (1), laquelle est pourvue du deuxième revêtement (8), est en contact avec la bride (10) ou le côté arrière de la bride (10), **caractérisé en ce que** le premier revêtement (7) comprend au moins 40% en poids, de préférence au moins 50% en poids d'au moins un composé époxyde, en particulier au moins un composé époxyde à base de phénol, et au moins un lubrifiant.

2. Dispositif de raccordement de tuyaux selon la revendication 1, **caractérisé en ce que** le premier revêtement présente un premier coefficient de friction µ₁, et le deuxième revêtement présente un deuxième coefficient de friction µ₂, dans lequel le premier coefficient de friction µ₁ est supérieur au deuxième coefficient de friction µ₂.

3. Dispositif de raccordement de tuyaux selon l'une quelconque des revendications 1 ou 2, **caractérisé en ce que** le rapport du premier coefficient de friction µ₁ du premier revêtement au deuxième coefficient de friction µ₂ du deuxième revêtement (µ₁/µ₂) est compris entre 1,1 et 4,0, de préférence entre 1,25 et 3,5, en particulier entre 1,26 et 3,5 et de préférence plus particulièrement entre 1,3 et 3.

4. Dispositif de raccordement de tuyaux selon l'une quelconque des revendications 1 à 3, **caractérisé en ce que** l'élément à vis, ou la surface de l'élément à vis, est entièrement ou substantiellement pourvu(e) du premier revêtement (7), et le deuxième revêtement (8) est appliqué sur le premier revêtement (7) dans au moins une région de l'au moins une surface de contact exempte de filet (4).

5. Dispositif de raccordement de tuyaux selon l'une quelconque des revendications 1 à 4, **caractérisé en ce que** l'élément à vis est un boulon fileté ou une fixation à vis (1) comportant un filet (3) configuré comme un filet externe.

6. Dispositif de raccordement de tuyaux selon la revendication 5, **caractérisé en ce que** l'extrémité avant du boulon fileté ou de la fixation à vis (1) comporte l'au moins une surface de contact exempte de filet (4), laquelle est revêtue avec le deuxième revêtement dans au moins une région.

7. Dispositif de raccordement de tuyaux selon l'une quelconque des revendications 1 à 6, **caractérisé en ce que** l'épaisseur de couche du premier revêtement (7) est comprise entre 2 et 25 µm, de préférence entre 3 et 20 µm.

8. Dispositif de raccordement de tuyaux selon l'une quelconque des revendications 1 à 7, **caractérisé en ce que** le lubrifiant dans le premier revêtement (7) est un matériau polymère ou un matériau polymère organique et est de préférence au moins un lubrifiant sélectionné parmi le groupe « polyoléfine, paraffine, matériau cireux, polyamide, fluoropolymère ».

9. Dispositif de raccordement de tuyaux selon l'une quelconque des revendications 1 à 8, **caractérisé en ce que** le lubrifiant est présente dans la quantité de 4 à 20% en poids, de préférence de 5 à 15% en poids et en particulier de 7 à 13% en poids dans le premier revêtement.

10. Dispositif de raccordement de tuyaux selon l'une quelconque des revendications 1 à 9, **caractérisé en ce que** le premier revêtement (7) contient 3 à 25% en poids, de préférence 4 à 20% en poids et en particulier 10 à 20% en poids d'au moins un matériau de charge.

11. Dispositif de raccordement de tuyaux selon l'une quelconque des revendications 1 à 10, **caractérisé en ce que** l'épaisseur de couche du deuxième revêtement (8) est comprise entre 1 et 100 µm, de préférence entre 2 et 80 µm.

12. Dispositif de raccordement de tuyaux selon l'une quelconque des revendications 1 à 11, **caractérisé en ce que** l'épaisseur de couche du deuxième revêtement (8) est supérieure à l'épaisseur de couche du premier revêtement (7).

13. Dispositif de raccordement de tuyaux selon l'une quelconque des revendications 1 à 12, **caractérisé en ce que** le deuxième revêtement (8) comprend au moins un polymère et au moins un lubrifiant.

14. Dispositif de raccordement de tuyaux selon l'une quelconque des revendications 1 à 13, **caractérisé en ce que** le deuxième revêtement contient au moins un lubrifiant parmi le groupe « sulfure de molybdène, graphite, polytétrafluoroéthylène ».

15. Dispositif de raccordement de tuyaux selon l'une quelconque des revendications 1 à 14, dans lequel le premier revêtement (7) contient entre 3 et 20% en poids d'aluminium, de préférence entre 4 et 15% en poids d'aluminium et en particulier entre 7 et 13% en poids d'aluminium.

16. Dispositif de raccordement de tuyaux selon l'une quelconque des revendications 1 à 15, dans lequel l'élément à vis est revêtu avec au moins un revêtement anticorrosion, en particulier avec un revêtement anticorrosion zinc-nickel, et dans lequel ce revêtement anticorrosion est disposé sous le premier revêtement.

17. Dispositif de raccordement de tuyaux selon l'une quelconque des revendications 1 à 16, dans lequel au moins une couche de passivation est appliquée sur l'élément à vis, dans lequel la couche de passivation est disposée sous le premier revêtement, et dans lequel la couche de passivation est de préférence disposée entre le revêtement anticorrosion et le premier revêtement.
